# EUROPÄISCHE PATENTSCHRIFT

(11) **EP 4 136 693 B1**
(45) Veröffentlichungstag und Bekanntmachung des Hinweises auf die Patenterteilung: **24.01.2024**
(21) Anmeldenummer: 21794506.2
(22) Anmeldetag: 14.10.2021
(51) Int. Cl.: H01M 8/04089, H01M 8/04225, H01M 8/04228, H01M 8/249, H01M 8/10

(54) **BRENNSTOFFREZIRKULATION IN EINER EINE MEHRZAHL VON BRENNSTOFFZELLENSTAPELN AUFWEISENDEN BRENNSTOFFZELLENVORRICHTUNG**
FUEL RECIRCULATION IN A FUEL CELL DEVICE HAVING A PLURALITY OF FUEL CELL STACKS
RECIRCULATION DE COMBUSTIBLE DANS UN DISPOSITIF DE PILE À COMBUSTIBLE COMPRENANT UNE PLURALITÉ D'EMPILEMENTS DE PILES À COMBUSTIBLE

(30) Priorität: 19.10.2020 DE 102020127469
(43) Veröffentlichungstag der Anmeldung: 22.02.2023
(73) Patentinhaber: AUDI AG, 85057 Ingolstadt (DE)
(72) Erfinder: RUF, Markus, 73550 Waldstetten (DE); STAUB, Hannah, 76689 Karlsdorf-Neuthard (DE)
(74) Vertreter: Hentrich Patent- & Rechtsanwaltspartnerschaft mbB
(86) Internationale Anmeldenummer: PCT/EP2021/078458
(87) Internationale Veröffentlichungsnummer: WO 2022/084144

(56) Entgegenhaltungen:
- EP-A1- 0 269 877
- DE-A1-102006 051 433
- DE-A1-102018 218 638
- US-A1- 2010 047 641

## Beschreibung

Die Erfindung betrifft eine Brennstoffzellenvorrichtung mit einem Brennstofftank, der eine Brennstoffzufuhrleitung aufweist, die in Brennstoffteilzufuhrleitungen verzweigt gebildet ist, mit einer Mehrzahl von Brennstoffzellenstapeln, die anodeneingangsseitig jeweils einen Brennstoffanschluss aufweisen, der mit jeweils einer der Brennstoffteilzufuhrleitungen strömungsmechanisch verbunden ist. Die Erfindung betrifft darüber hinaus ein Verfahren zum Betreiben einer Brennstoffzellenvorrichtung.

Brennstoffzellen werden zur Energieversorgung insbesondere in Kraftfahrzeugen eingesetzt. Um die erforderliche Menge an Energie bereitzustellen, wird eine Mehrzahl von Brennstoffzellen in einen Brennstoffzellenstapel angeordnet. Zum Antrieb von Nutzfahrzeugen werden hohe Leistungen benötigt, so dass Brennstoffzellenvorrichtungen für Nutzfahrzeuge vorzugsweise eine Mehrzahl von Brennstoffzellenstapeln aufweisen. Um diese Mehrzahl von Brennstoffzellenstapeln einzeln betrieben und ansteuern zu können, wird ein baulich aufwendiges System von einzelnen Reaktantenzufuhr- und Abgasleitungen benötigt. Zur effizienten Nutzung des Brennstoffs ist zusätzlich ein baulich komplexes System an Brennstoffrezirkulationsleitungen, die mit den einzelnen Brennstoffzellenstapeln strömungsverbundenen sind, erforderlich. Dies bedeutet einen hohen Kostenaufwand und einen komplexen Systembetrieb.

Die CN 110 828 857 A und die KR 2006 0024 900 A offenbaren jeweils eine Brennstoffzellenvorrichtung mit einer Mehrzahl von Brennstoffzellenstapeln, die eine zentrale Brennstoffrezirkulationsleitung aufweist, wobei die zentrale Brennstoffrezirkulationsleitung mit jedem der Brennstoffzellenstapel strömungsmechanisch verbunden ist. Die WO 2007/087240 A2 offenbart eine Mehrzahl von Brennstoffzellenstapeln in einer Brennstoffzellenvorrichtung, wobei jeder der Brennstoffzellenstapel eine Brennstoffrezirkulationsleitung aufweist, die mit der Brennstoffzufuhrleitung strömungsmechanisch verbunden ist.

Die DE 10 2018 218 638 A1 zeigt eine Brennstoffzellenvorrichtung mit einer Mehrzahl von Brennstoffzellenstapeln. Die Brennstoffzufuhrleitung ist in mehrere Brennstoffteilzufuhrleitungen verzweigt gebildet, wobei jeder der Brennstoffzellenstapel mit der Brennstoffrezirkulationsleitung strömungsmechanisch verbunden ist.

Die EP 0 269 877 A1, die DE 10 2006 051 433 A1 und die US 2010/047 641 A1 zeigen jeweils ein Brennstoffrezirkulationssystem, bei dem eine Mehrzahl von Brennstoffzellen in Serie geschaltet sind und einer der Brennstoffzellenstapel mit der Brennstoffrezirkulationsleitung strömungsmechanisch verbunden ist.

Daher ist es Aufgabe der vorliegenden Erfindung eine Brennstoffzellenvorrichtung und ein Verfahren zum Betreiben einer Brennstoffzellenvorrichtung bereitzustellen, die hohe Leistungen erzeugt und eine reduzierte Systemkomplexität aufweist.

Die die Brennstoffzellenvorrichtung betreffende Aufgabe wird durch eine Brennstoffzellenvorrichtung mit den Merkmalen des Anspruchs 1 gelöst. Die das Verfahren zum Betreiben einer Brennstoffzellenvorrichtung betreffende Aufgabe wird durch ein Verfahren mit den Merkmalen des Anspruchs 6 gelöst. Vorteilhafte Ausgestaltungen mit zweckmäßigen Weiterbildungen der Erfindung sind in den abhängigen Ansprüchen angegeben.

Die Brennstoffzellenvorrichtung zeichnet sich dadurch aus, dass ausschließlich einer der Brennstoffzellenstapel anodenaustrittsseitig an eine Brennstoffrezirkulationsleitung angeschlossen ist. Die Strömungsführung der Brennstoffrezirkulationsleitung ist dabei derart gewählt, dass der Brennstoff ausschließlich in den an die Brennstoffrezirkulationsleitung angeschlossenen Brennstoffzellenstapel zurückführbar ist. Es erfolgt also eine wesentliche Vereinfachung der Brennstoffrezirkulation indem nur ein Stapel mit dem rezirkulierenden Brennstoff versorgt wird. Diese Vereinfachung reduziert zudem Kosten und den für die Brennstoffrezirkulation benötigten Platz innerhalb der Brennstoffzellenvorrichtung. Darüber hinaus ist es vorgesehen, dass die Brennstoffzellenvorrichtung in der Brennstoffrezirkulationsleitung lediglich ein einziges Purgeventil aufweist. In anderen Worten ist es also ausreichend, dass die Brennstoffzellenvorrichtung genau ein Purgeventil aufweist. Auch dies senkt den Kosten- und Komplexitätsaufwand. Analog weist die Brennstoffzellenvorrichtung vorzugsweise nur ein Fördermittel in der Brennstoffrezirkulationsleitung auf. Dieses kann als eine Jet-Pumpe oder als ein Rezirkulationsgebläse gebildet sein.

Insbesondere ist es von Vorteil, wenn eine an die Anzahl der Brennstoffzellenanschlüsse angepasste Anzahl von Strömungsstrecken vorhanden ist, wenn jede der Strömungsstrecken vom Brennstoffzellentank über die Brennstoffzufuhrleitung und über eine der Brennstoffteilzufuhrleitungen zu einem der Brennstoffanschlüsse geführt ist, und wenn ausschließlich der die längste Strömungsstrecke aufweisenden letzte der Brennstoffzellenstapel an die Brennstoffrezirkulationsleitung angeschlossen ist. Ist ausschließlich der letzte der Brennstoffzellenstapel an die Brennstoffrezirkulationsleitung angeschlossen, so weisen die weiteren Brennstoffzellenstapel, welche strömungstechnisch vor, also stromauf, dem/des letzten Brennstoffzellenstapel gelegen sind, einen verbesserten Betrieb auf, weil sie mit reinem Brennstoff versorgt werden. Der Brennstoffpartialdruck ist bei diesen weiteren, also nicht an die Brennstoffrezirkulationsleitung angeschlossene Brennstoffzellenstapel, ist somit höher, wodurch sich eine höhere Zellspannung und Effizienz erreichen lässt.

In einer alternativen Ausführungsform ist es vorgesehen, dass eine an die Anzahl der Brennstoffzellenanschlüsse angepasste Anzahl von Strömungsstrecken vorhanden ist, dass jede der Strömungsstrecken vom Brennstoffzellentank über die Brennstoffzufuhrleitung und über eine der Brennstoffteilzufuhrleitungen zu einem der Brennstoffanschlüsse geführt ist, und dass ausschließlich der die kürzeste Strömungsstrecke aufweisende erste der Brennstoffzellenstapel an die Brennstoffrezirkulationsleitung angeschlossen ist. Auch hier besteht der Vorteil darin, dass die weiteren, dem ersten Brennstoffzellenstapel strömungstechnisch nachgelagerten, also stromab des ersten Brennstoffzellenstapels gelegene, weitere Brennstoffzellenstapel mit reinem Brennstoff versorgt werden und einen verbesserten Betrieb bzw. einen höheren Brennstoffpartialdruck aufweisen. Die weiteren Brennstoffzellenstapel erreichen somit eine höhere Zellspannung und Effizienz.

Weiterhin ist es vorteilhaft, wenn die Brennstoffrezirkulationsleitung mit der Brennstoffteilzufuhrleitung des Brennstoffzellenstapels strömungsmechanisch verbunden ist, der an die Brennstoffrezirkulationsleitung angeschlossen ist. Dies ermöglicht eine effiziente Wiedereinspeisung des Brennstoffs in die Anodenräume des Brennstoffzellenstapels, welcher an die Brennstoffrezirkulationsleitung angeschlossen ist.

Prinzipiell ist es aber auch möglich, dass einer der anderen der Brennstoffzellenstapel, also weder der erste noch der letzte, an die Brennstoffrezirkulationsleitung angeschlossen ist.

Zur optimalen Nutzung des Brennstoffs in den weiteren Brennstoffzellenstapeln und zur Effizienzsteigerung ist es sinnvoll, wenn die weiteren der Brennstoffzellenstapel anodenaustrittsseitig mit einer der Brennstoffteilzufuhrleitungen eines benachbarten Brennstoffzellenstapels strömungsmechanisch verbunden ist. Dies erhöht den Wasserstoffpartialdruck innerhalb der weiteren Brennstoffzellenstapeln und erhöht die Effizienz der weiteren Brennstoffzellenstapel.

Das Verfahren zum Betreiben einer Brennstoffzellenvorrichtung zeichnet sich durch die folgenden Schritte aus:
a) Aktivieren des an die Brennstoffrezirkulationsleitung angeschlossenen Brennstoffzellenstapels durch Zuführen der Reaktanten,
b) Betreiben der Brennstoffzellenvorrichtung mit zumindest dem an die Brennstoffrezirkulationsleitung angeschlossenen Brennstoffzellenstapel, und
c) Deaktivieren des an die Brennstoffrezirkulationsleitung angeschlossenen Brennstoffzellenstapels durch Trennen der Zufuhr der Reaktanten.

In anderen Worten wird immer der Brennstoffzellenstapel zuerst aktiviert, der die Brennstoffrezirkulationsleitung aufweist. Dadurch ist ein sicheres und effizientes Betreiben der Brennstoffzellenvorrichtung möglich. Gleichzeitig wird eine optimale Nutzung des vorhandenen Brennstoffs erreicht.

Weiterhin ist es von Vorteil, wenn beim Anstellen der Brennstoffzellenvorrichtung mindestens ein weiterer Brennstoffzellenstapel erst dann aktiviert wird, durch Zuführen der Reaktanten und durch elektrisches Verbinden des mindestens einen weiteren Brennstoffzellenstapels mit mindestens einem bereits aktiven Brennstoffzellenstapel, nachdem der an die Brennstoffrezirkulationsleitung angeschlossene Brennstoffzellenstapel aktiviert wurde. Dies ermöglicht die Brennstoffzellenvorrichtung mit mehreren Brennstoffzellenstapeln zu betreiben und so hohe Leistungen abrufen zu können die beispielsweise bei einer Implementierung einer Brennstoffzellenvorrichtung in einem Nutzfahrzeug benötigt werden. Ebenso ermöglicht dies die einzelnen Brennstoffzellenstapel unabhängig voneinander zu aktivieren, je nachdem, welche Leistung abgefragt wird.

In diesem Zusammenhang ist es bevorzugt, wenn beim Abstellen der Brennstoffzellenvorrichtung zuerst die weiteren Brennstoffzellenstapel durch Trennen der Zufuhr von Reaktanten und durch elektrisches Trennen der weiteren Brennstoffzellenstapel deaktiviert werden bevor der an die Brennstoffrezirkulationsleitung angeschlossene Brennstoffzellenstapel deaktiviert wird. In diesem Zusammenhang ist es auch möglich, dass die Deaktivierung einzelner Brennstoffzellenstapel auch in Abhängigkeit von einer abgefragten Leistung erfolgen kann, sodass je nachdem welche Leistung für das Fahrzeug benötigt wird, eine entsprechende Anzahl von Brennstoffzellenstapeln in der Brennstoffzellenvorrichtung aktiviert oder deaktiviert sind.

Weiterhin ist es sinnvoll, wenn mindestens einer der weiteren Brennstoffzellenstapel mit einem höheren Brennstoffdruck betrieben wird als der an die Brennstoffrezirkulationsleitung angeschlossene Brennstoffzellenstapel. Insbesondere, wenn der letzte Brennstoffzellenstapel an die Brennstoffrezirkulationsleitung angeschlossen ist, ist es in diesem Zusammenhang vorgesehen, dass der die kürzeste aller Strömungsstrecken aufweisende erste Brennstoffzellenstapel mit einem höheren Brennstoffdruck betrieben wird, als der die längste aller Strömungsstrecken aufweisende letzte Brennstoffzellenstapel. Umgekehrt ist es sinnvoll, dass wenn der erste Brennstoffzellenstapel an die Brennstoffrezirkulationsleitung angeschlossen ist, dass der die längste aller Strömungsstrecken aufweisende letzte Brennstoffzellenstapel mit einem höheren Brennstoffdruck betrieben wird, als der die kürzeste aller Strömungsstrecken aufweisende erste Brennstoffzellenstapel. Dies ermöglicht eine optimale Effizienz bei dem Betreiben der Brennstoffzellenvorrichtung.

Weiterhin ist es in diesem Zusammenhang vorgesehen, dass der Brennstoffdruck mindestens eines der weiteren Brennstoffzellenstapel derart gewählt wird, dass der anodenaustrittsseitige Brennstoffdruck dieses weiteren Brennstoffzellenstapels dem anodenaustrittsseitigen Brennstoffdruck des an die Brennstoffrezirkulationsleitung angeschlossenen Brennstoffzellenstapels entspricht. Wenn der letzte der Brennstoffzellenstapel an die Brennstoffrezirkulationsleitung angeschlossen ist, ist es insbesondere vorgesehen, dass der Brennstoffdruck des die kürzeste aller Strömungsstrecken aufweisenden ersten Brennstoffzellenstapels derart gewählt wird, dass der anodenaustrittsseitige Brennstoffdruck des ersten Brennstoffzellenstapels dem anodenaustrittsseitigen Brennstoffdruck des die längste aller Strömungsstrecken aufweisenden letzten Brennstoffzellenstapels entspricht. In einer alternativen Ausführungsform, wenn der erste der Brennstoffzellenstapel an die Brennstoffrezirkulationsleitung angeschlossen ist, ist es vorteilhaft, wenn der Brennstoffdruck des die längste aller Strömungsstrecken aufweisenden letzen Brennstoffzellenstapels derart gewählt wird, dass der anodenaustrittsseitige Brennstoffdruck des letzten Brennstoffzellenstapels dem anodenaustrittsseitigen Brennstoffdruck des die kürzeste aller Strömungsstrecken aufweisenden ersten Brennstoffzellenstapels entspricht

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigt:

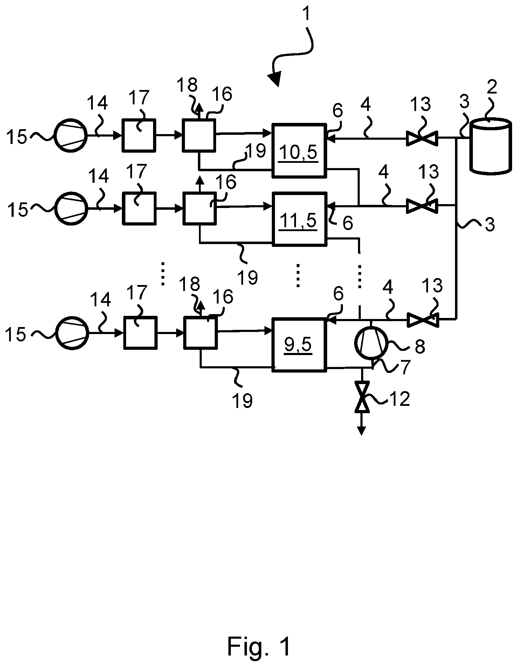

- Fig. 1: Brennstoffzellenvorrichtung mit einer Mehrzahl von Brennstoffzellenstapeln

Brennstoffzellen dienen der Energieerzeugung und können insbesondere zur Energieerzeugung für den Antrieb von Kraftfahrzeugen angewendet werden. Dabei werden bevorzugt eine Mehrzahl von Brennstoffzellen in einem Brennstoffzellenstapel 5 zusammengefasst.

Jede der Brennstoffzellen umfasst eine Anode, eine Kathode sowie eine die Anode von der Kathode trennende, protonenleitfähige Polymer-Membran. Die Polymer-Membran ist aus einem lonomer, vorzugsweise einem sulfonierten Tetrafluorethylen-Polymer (PTFE) oder einem Polymer der perfluorierten Sulfonsäure (PFSA) gebildet. Alternativ kann die Polymer-Membran als eine sulfonierte Hydrocarbon-Membran gebildet sein.

Den Anoden und/oder den Kathoden kann zusätzlich ein Katalysator beigemischt sein, wobei die Membran vorzugsweise auf ihrer ersten Seite und/oder auf ihrer zweiten Seite mit einer Katalysatorschicht aus einem Edelmetall oder einem Gemisch umfassend Edelmetalle wie Platin, Palladium, Ruthenium oder dergleichen beschichtet sind, die als Reaktionsbeschleuniger bei der Reaktion der jeweiligen Brennstoffzelle dienen.

Über einen Anodenraum kann der Anode Brennstoff (z.B. Wasserstoff) zu-geführt werden. In einer Polymerelektrolytmembranbrennstoffzelle (PEM-Brennstoffzelle) werden an der Anode Brennstoff oder Brennstoffmoleküle in Protonen und Elektronen aufgespalten. Die PEM lässt die Protonen hin-durch, ist aber undurchlässig für die Elektronen. An der Anode erfolgt beispielsweise die Reaktion: 2H₂ → 4H⁺ + 4e⁻ (Oxidation/Elektronenabgabe). Während die Protonen durch die PEM zur Kathode hindurchtreten, werden die Elektronen über einen externen Stromkreis an die Kathode oder an einen Energiespeicher geleitet.

Über einen Kathodenraum kann der Kathode das Kathodengas (z.B. Sauerstoff oder Sauerstoff enthaltene Luft) zugeführt werden, so dass kathodenseitig die folgende Reaktion stattfindet: O₂ + 4H⁺ + 4e⁻ → 2H₂O (Reduktion/Elektronenaufnahme).

Um eine lonenleitfähigkeit für Wasserstoffprotonen durch die PEM zu gewährleisten, ist das Vorhandensein von Wassermolekülen in der PEM erforderlich. Deshalb wird insbesondere das Kathodengas befeuchtet, bevor es der Brennstoffzelle zugeführt wird, um eine Feuchtigkeitssättigung der PEM herbeizuführen.

Figur 1 zeigt eine Brennstoffzellenvorrichtung 1 mit einer Mehrzahl von Brennstoffzellenstapeln 5, 9, 10, 11 und einem Brennstofftank 2. Derartige Brennstoffzellenvorrichtungen 1 können beispielsweise in Nutzfahrzeugen eingesetzt werden, um hohe Leistungen zu erzeugen. Der Brennstofftank 2 weist eine Brennstoffzufuhrleitung 3 auf, die in Brennstoffteilzufuhrleitungen 4 verzweigt gebildet ist. Die Mehrzahl von Brennstoffzellenstapeln 5, 9, 10, 11 weisen anodeneingangsseitig jeweils einen Brennstoffanschluss 6 auf. In die Brennstoffteilzufuhrleitungen 4 sind eine an die Anzahl der Brennstoffteilzufuhrleitungen 4 angepasste Anzahl von Brennstoffventilen 13 eingekoppelt.

Diese ermöglichen die einzelnen Brennstoffzellenstapel 5, 9, 10, 11 unabhängig voneinander mit Brennstoff versorgen zu können, also unabhängig voneinander betreiben zu können.

Weiterhin ist eine an die Anzahl der Brennstoffzellenanschlüsse 6 angepasste Anzahl von Strömungsstrecken vorhanden. Jede der Strömungsstrecken ist vom Brennstoffzellentank 2 über die Brennstoffzufuhrleitung 3 und über eine der Brennstoffteilzufuhrleitungen 4 zu einem der Brennstoffanschlüsse 6 geführt. Im vorliegenden Ausführungsbeispiel ist ausschließlich der die längste Strömungsstrecke aufweisende letzte der Brennstoffzellenstapel 9, 5 an die Brennstoffrezirkulationsleitung 7 angeschlossen. Wie aus der Figur 1 ersichtlich hat dies den Vorteil, dass die gesamte Brennstoffzellenvorrichtung 1 lediglich eine Brennstoffrezirkulationsleitung 7 aufweist wodurch auch nur ein Fördermittel 8 und auch lediglich ein Purgeventil 12 notwendig ist. Das Fördermittel 8, kann als eine Jet-Pumpe oder als ein Rezirkulationsgebläse gebildet sein. Der Brennstoff wird mittels der Brennstoffrezirkulationsleitung 7 durch das Fördermittel ausschließlich in die Brennstoffteilzufuhrleitung 4 des an die Brennstoffrezirkulationsleitung 7 angeschlossenen Brennstoffzellenstapels 5 zurückgeführt

In einem nicht gezeigten Ausführungsbeispiel ist es auch möglich, dass nicht der letzte der Brennstoffzellenstapel 5, 9 sondern der die kürzeste Strömungsstrecke aufweisende erste der Brennstoffzellenstapel 5, 10 an die Brennstoffrezirkulationsleitung 7 angeschlossen ist.

Die weiteren Brennstoffzellenstapel 11, 5 sind anodenaustrittsseitig mit einer der Brennstoffteilzufuhrleitungen 4 eines benachbarten Brennstoffzellenstapels 5 strömungsmechanisch verbunden. Dies führt zu einer Druckerhöhung des Brennstoffdrucks in dem jeweiligen Brennstoffzellenstapel 5, 9, 10, 11.

Die einzelnen Brennstoffzellenstapel weisen neben den separaten Brennstoffanschlüssen 6 zur Zuführung von Brennstoff in die Anodenräume auch separate Kathodengasanschlüsse zur Zuführung von Kathodengas in die Kathodenräume der Brennstoffzellenstapel 5 auf. Dabei sind die Kathodengasanschlüsse mit der Kathodenzufuhrleitung 14 verbunden, die von den Verdichtern 15 über einen Ladeluftkühler und einen Befeuchter 16 zum Brennstoffzellenstapel 9, 10, 11 führt. Weiterhin ist eine Kathodenabfuhrleitung 19 vorhanden, die zum Befeuchter 16 führt. Das Kathodengas wird durch den jeweiligen Verdichter 15 angesaugt, durch diesen verdichtet und über die Kathodenzufuhrleitung 14 und den Ladeluftkühler 17 in den Befeuchter 16 geleitet.

Das Verfahren zum Betreiben der Brennstoffzellenvorrichtung 1 läuft folgendermaßen ab. Beim Anstellen der Brennstoffzellenvorrichtung 1 wird zunächst der an die Brennstoffrezirkulationsleitung 7 angeschlossene Brennstoffzellenstapel 5, also in dem vorliegenden Ausführungsbeispiel der letzte der Brennstoffzellenstapel 9, 5, durch Zuführen der Reaktanten, also des Brennstoffs und des Kathodengases, aktiviert.

Im Anschluss an die Aktivierung des an die Brennstoffrezirkulationsleitung 7 angeschlossenen Brennstoffzellenstapels 5 wird, bei Bedarf, mindestens ein weiterer Brennstoffzellenstapel 11, 5 durch Zuführen der Reaktanten und durch elektrisches Verbinden des mindestens einen weiteren Brennstoffzellenstapels 5,11 mit mindestens einem bereits aktiven Brennstoffzellenstapel 5 aktiviert. Der mindestens eine weitere Brennstoffzellenstapel 11, 5 wird dabei vorzugsweise mit einem höheren Brennstoffdruck betrieben als der an die Brennstoffrezirkulationsleitung 7 angeschlossene Brennstoffzellenstapel 9, 5. Der Brennstoffdruck ist dabei derart gewählt, dass der anodenaustrittsseitige Brennstoffdruck dieses mindestens einen weiteren Brennstoffzellenstapel 11, 5 dem anodenaustrittsseitigen Brennstoffdruck des an die Brennstoffrezirkulationsleitung 7 angeschlossenen Brennstoffzellenstapels 5, 9 entspricht. Die Brennstoffzellenvorrichtung 1 wird nun mit den aktiven Brennstoffzellenstapeln 5, 9, 10, 11 betrieben.

Durch das separate Aktivieren der Brennstoffzellenstapel 5, 9, 10, 11 ist es möglich die Brennstoffzellenvorrichtung 1 in Abhängigkeit der angeforderten Leistung betreiben zu können. Beim Abstellen der Brennstoffzellenvorrichtung 1 werden zuerst die weiteren Brennstoffzellenstapel 11, 5 durch Trennen der Zufuhr von Reaktanten und durch elektrisches Trennen der weiteren Brennstoffzellenstapel 11, 5 deaktiviert, bevor der an die Brennstoffrezirkulationsleitung 7 angeschlossene Brennstoffzellenstapel 9, 5 durch Trennen der Zufuhr der Reaktanten deaktiviert wird.

### BEZUGSZEICHENLISTE:

- 1: Brennstoffzellevorrichtung
- 2: Brennstofftank
- 3: Brennstoffzufuhrleitung
- 4: Brennstoffteilzufuhrleitungen
- 5: Brennstoffzellenstapeln
- 6: Brennstoffanschluss
- 7: Brennstoffrezirkulationsleitung
- 8: Fördermittel
- 9: Letzter Brennstoffzellenstapel
- 10: Erster Brennstoffzellenstapel
- 11: Weiterer Brennstoffzellenstapel
- 12: Purgeventil
- 13: Brennstoffventil
- 14: Kathodenzufuhrleitung
- 15: Verdichter
- 16: Befeuchter
- 17: Ladeluftkühler
- 18: Befeuchterabfuhrleitung
- 19: Kathodenabfuhrleitung

## Patentansprüche

1. Brennstoffzellenvorrichtung (1) mit einem Brennstofftank (2), der eine Brennstoffzufuhrleitung (3) aufweist, die in Brennstoffteilzufuhrleitungen (4) verzweigt gebildet ist, mit einer Mehrzahl von Brennstoffzellenstapeln (5), die anodeneingangsseitig jeweils einen Brennstoffanschluss (6) aufweisen, der mit jeweils einer der Brennstoffteilzufuhrleitungen (4) strömungsmechanisch verbunden ist, **dadurch gekennzeichnet, dass** ausschließlich einer der Brennstoffzellenstapel (5) anodenaustrittseitig an eine Brennstoffrezirkulationsleitung (7) angeschlossen ist, und dass die Strömungsführung der Brennstoffrezirkulationsleitung (7) derart gewählt ist, dass der Brennstoff ausschließlich in den an die Brennstoffrezirkulationsleitung (7) angeschlossenen Brennstoffzellenstapel (5) zurückführbar ist.

2. Brennstoffzellenvorrichtung (1) nach Anspruch 1, **dadurch gekennzeichnet, dass** eine an die Anzahl der Brennstoffzellenanschlüsse (6) angepasste Anzahl von Strömungsstrecken vorhanden ist, dass jede der Strömungsstrecken vom Brennstoffzellentank (2) über die Brennstoffzufuhrleitung (3) und über eine der Brennstoffteilzufuhrleitungen (4) zu einem der Brennstoffanschlüsse (6) geführt ist, und dass ausschließlich der die längste Strömungsstrecke aufweisende letzte der Brennstoffzellenstapel (9,5) an die Brennstoffrezirkulationsleitung (7) angeschlossen ist.

3. Brennstoffzellenvorrichtung (1) nach Anspruch 1, **dadurch gekennzeichnet, dass** eine an die Anzahl der Brennstoffzellenanschlüsse (6) angepasste Anzahl von Strömungsstrecken vorhanden ist, dass jede der Strömungsstrecken vom Brennstoffzellentank (2) über die Brennstoffzufuhrleitung (3) und über eine der Brennstoffteilzufuhrleitungen (4) zu einem der Brennstoffanschlüsse (6) geführt ist, und dass ausschließlich der die kürzeste Strömungsstrecke aufweisende erste der Brennstoffzellenstapel (10,5) an die Brennstoffrezirkulationsleitung (7) angeschlossen ist.

4. Brennstoffzellenvorrichtung (1) nach einem der Ansprüche 1 bis 3, **dadurch gekennzeichnet, dass** die Brennstoffrezirkulationsleitung (7) mit der Brennstoffteilzufuhrleitung (4) des Brennstoffzellenstapels (5) strömungsmechanisch verbunden ist, der an die Brennstoffrezirkulationsleitung (7) angeschlossen ist.

5. Brennstoffzellenvorrichtung (1) nach einem der Ansprüche 1 bis 4, **dadurch gekennzeichnet, dass** die weiteren der Brennstoffzellenstapel (11,5) anodenaustrittsseitig mit einer der Brennstoffteilzufuhrleitungen (4) eines benachbarten Brennstoffzellenstapels (5) strömungsmechanisch verbunden ist.

6. Verfahren zum Betreiben einer Brennstoffzellenvorrichtung (1) nach einem der Ansprüche 1 bis 5, umfassend die folgenden Schritte:
a) Aktivieren des an die Brennstoffrezirkulationsleitung (7) angeschlossenen Brennstoffzellenstapels (5) durch Zuführen der Reaktanten,
b) Betreiben der Brennstoffzellenvorrichtung (1) mit zumindest dem an die Brennstoffrezirkulationsleitung (7) angeschlossenen Brennstoffzellenstapel (5) und
c) Deaktivieren des an die Brennstoffrezirkulationsleitung (7) angeschlossenen Brennstoffzellenstapels (5) durch Trennen der Zufuhr der Reaktanten.

7. Verfahren nach Anspruch 6, **dadurch gekennzeichnet, dass** beim Anstellen der Brennstoffzellenvorrichtung (1) mindestens ein weiterer Brennstoffzellenstapel (11,5) erst dann aktiviert wird, durch Zuführen der Reaktanten und durch elektrisches Verbinden des mindestens einen weiteren Brennstoffzellenstapels (11,5) mit mindestens einem bereits aktiven Brennstoffzellenstapel (5), nachdem der an die Brennstoffrezirkulationsleitung (7) angeschlossene Brennstoffzellenstapel (5) aktiviert wurde.

8. Verfahren nach Anspruch 7, **dadurch gekennzeichnet, dass** beim Abstellen der Brennstoffzellenvorrichtung (1) zuerst die weiteren Brennstoffzellenstapel (11,5) durch Trennen der Zufuhr von Reaktanten und durch elektrisches Trennen der weiteren Brennstoffzellenstapel (11,5) deaktiviert werden, bevor der an die Brennstoffrezirkulationsleitung (7) angeschlossene Brennstoffzellenstapel (5) deaktiviert wird.

9. Verfahren nach Anspruch 7 oder 8, **dadurch gekennzeichnet, dass** mindestens einer der weiteren Brennstoffzellenstapel (11,5) mit einem höheren Brennstoffdruck betrieben wird als der an die Brennstoffrezirkulationsleitung (7) angeschlossene Brennstoffzellenstapel (5).

10. Verfahren nach einem der Ansprüche 7 bis 9, **dadurch gekennzeichnet, dass** der Brennstoffdruck mindestens eines der weiteren Brennstoffzellenstapel (11,5) derart gewählt wird, dass der anodenaustrittseitige Brennstoffdruck dieses weiteren Brennstoffzellenstapels (11,5) dem anodenaustrittsseitigen Brennstoffdruck des an die Brennstoffrezirkulationsleitung (7) angeschlossenen Brennstoffzellenstapels (5) entspricht.

## Claims

1. A Fuel cell device (1) having a fuel tank (2) which has a fuel feed line (3) which is formed in a branched manner in fuel part feed lines (4), having a plurality of fuel cell stacks (5) which each have, on the anode inlet side, a fuel connection (6) which is connected in terms of flow mechanics to one of the fuel part feed lines (4), **characterized in that** exclusively one of the fuel cell stacks (5) is connected on the anode outlet side to a fuel recirculation line (7), and **in that** the flow guidance of the fuel recirculation line (7) is selected in such a way that the fuel can be returned exclusively into the fuel cell stack (5) connected to the fuel recirculation line (7).

2. The fuel cell device (1) according to claim 1, **characterized in that** a number of flow paths adapted to the number of fuel cell connections (6) is present, **in that** each of the flow paths is led from the fuel cell tank (2) via the fuel supply line (3) and via one of the fuel part supply lines (4) to one of the fuel connections (6), and **in that** only the last of the fuel cell stacks (9, 5) having the longest flow path is connected to the fuel recirculation line (7).

3. The fuel cell device (1) according to claim 1, **characterized in that** a number of flow paths adapted to the number of fuel cell connections (6) is present, **in that** each of the flow paths is led from the fuel cell tank (2) via the fuel supply line (3) and via one of the fuel part supply lines (4) to one of the fuel connections (6), and **in that** only the first of the fuel cell stacks (10,5) having the shortest flow path is connected to fuel recirculation line (7).

4. The fuel cell device (1) according to any one of claims 1 to 3, **characterized in that** the fuel recirculation line (7) is fluidically connected to the fuel part supply line (4) of the fuel cell stack (5) which is connected to the fuel recirculation line (7).

5. The fuel cell device (1) according to any one of claims 1 to 4, **characterized in that** the further ones of the fuel cell stacks (11,5) is fluidically connected on the anode outlet side to one of the fuel part supply lines (4) of an adjacent fuel cell stack (5).

6. A Method of operating a fuel cell device (1) according to any one of claims 1 to 5, comprising the following steps:
a) Activating the fuel cell stack (5) connected to the fuel recirculation line (7) by supplying the reactants,
b) Operating the fuel cell device (1) with at least the fuel cell stack (5) connected to the fuel recirculation line (7), and
c) Deactivating the fuel cell stack (5) connected to the fuel recirculation line (7) by disconnecting the supply of reactants.

7. The method according to claim 6, **characterized in that**, when the fuel cell apparatus (1) is started up, at least one further fuel cell stack (11,5) is activated only by supplying the reactants and by electrically connecting the at least one further fuel cell stack (5) after the fuel cell stack (5) connected to the fuel recirculation line (7) has been activated.

8. The method according to claim 7, **characterized in that**, when the fuel cell apparatus (1) is shut down, the further fuel call stacks (11, 5) are first deactivated by disconnecting the supply of reactants and by electrically disconnecting the further fuel cell stack (11,5), before the fuel cell stack (5) connected to the fuel recirculation line (7) is deactivated.

9. The method according to claim 7 or 8, **characterized in that** at least one of the further fuel cell stacks (11, 5) is operated at a higher fuel pressure than the fuel cell stack (5) connected to the fuel recirculation line (7).

10. The method according to any one of claims 7 to 9, **characterized in that** the fuel pressure of at least one of the further fuel cell stacks (11, 5) is selected in such a way that the anode outlet-side fuel pressure of this further fuel cell stack (11, 5) corresponds to the anode outlet-side fuel pressure of the fuel cell stack (5) connected to the fuel recirculation line (7).

## Revendications

1. Dispositif de pile à combustible (1) avec un réservoir de combustible (2), qui présente une conduite d'alimentation en combustible (3), qui est formée de manière ramifiée dans des conduites d'alimentation partielle en combustible (4), avec une pluralité d'empilements de piles à combustible (5), qui présentent, du côté de l'entrée de l'anode, respectivement un raccordement de combustible (6), qui est relié fluidiquement respectivement à l'une des conduites d'alimentation partielle en combustible (4), **caractérisé en ce qu'**exclusivement l'un des empilements de piles à combustible (5) est raccordé, côté sortie de l'anode, à une conduite de recirculation de combustible (7), et **en ce que** le guidage d'écoulement de la conduite de recirculation de combustible (7) est choisi de sorte que le combustible puisse être renvoyé exclusivement dans l'empilement de piles à combustible (5) raccordé à la conduite de recirculation de combustible (7).

2. Dispositif de pile à combustible (1) selon la revendication 1, **caractérisé en ce qu'**il existe un nombre de tronçons d'écoulement adapté au nombre de raccordements de pile à combustible (6), **en ce que** chacun des tronçons d'écoulement est guidé depuis le réservoir de piles à combustible (2) via la conduite d'alimentation en combustible (3) et via l'une des conduites d'alimentation partielle en combustible (4) vers l'un des raccordements de combustible (6), et **en ce que** seul le dernier des empilements de piles à combustible (9, 5) présentant le tronçon d'écoulement le plus long est raccordé à la conduite de recirculation de combustible (7).

3. Dispositif de pile à combustible (1) selon la revendication 1, **caractérisé en ce qu'**il existe un nombre de tronçons d'écoulement adapté au nombre de raccordements de pile à combustible (6), **en ce que** chacun des tronçons d'écoulement est guidé depuis le réservoir de piles à combustible (2) via la conduite d'alimentation en combustible (3) et via l'une des conduites d'alimentation partielle en combustible (4) vers l'un des raccordements de combustible (6), et **en ce que** seul le premier des empilements de piles à combustible (10, 5) présentant le tronçon d'écoulement le plus court est raccordé à la conduite de recirculation de combustible (7).

4. Dispositif de pile à combustible (1) selon l'une quelconque des revendications 1 à 3, **caractérisé en ce que** la conduite de recirculation de combustible (7) est reliée fluidiquement à la conduite d'alimentation partielle en combustible (4) de l'empilement de piles à combustible (5) qui est raccordé à la conduite de recirculation de combustible (7).

5. Dispositif de pile à combustible (1) selon l'une quelconque des revendications 1 à 4, **caractérisé en ce que** l'autre des empilements de piles à combustible (11, 5) est relié fluidiquement, du côté de la sortie de l'anode, à l'une des conduites d'alimentation partielle en combustible (4) d'un empilement de piles à combustible (5) voisin.

6. Procédé de fonctionnement d'un dispositif de pile à combustible (1) selon l'une quelconque des revendications 1 à 5, comprenant les étapes suivantes consistant à :
a) activer l'empilement de piles à combustible (5) raccordé à la conduite de recirculation de combustible (7) en y amenant les réactifs,
b) faire fonctionner le dispositif de pile à combustible (1) avec au moins l'empilement de piles à combustible (5) raccordé à la conduite de recirculation de combustible (7), et
c) désactiver l'empilement de piles à combustible (5) raccordé à la conduite de recirculation de combustible (7) en coupant l'alimentation des réactifs.

7. Procédé selon la revendication 6, **caractérisé en ce que**, lors de la mise en marche du dispositif de pile à combustible (1), au moins un autre empilement de piles à combustible (11, 5) est seulement activé, en y amenant les réactifs et en reliant électriquement l'au moins un autre empilement de piles à combustible (11, 5) à au moins un empilement de piles à combustible (5) déjà actif, après que l'empilement de piles à combustible (5) raccordé à la conduite de recirculation de combustible (7) a été activé.

8. Procédé selon la revendication 7, **caractérisé en ce que**, lors de l'arrêt du dispositif de pile à combustible (1), les autres empilements de piles à combustible (11, 5) sont d'abord désactivés en coupant l'alimentation en réactifs et en coupant électriquement les autres empilements de piles à combustible (11, 5), avant que l'empilement de piles à combustible (5) raccordé à la conduite de recirculation de combustible (7) ne soit désactivé (7).

9. Procédé selon la revendication 7 ou 8, **caractérisé en ce qu'**au moins l'un des autres empilements de piles à combustible (11, 5) est exploité avec une pression de combustible plus élevée que celle de l'empilement de piles à combustible (5) raccordé à la conduite de recirculation de combustible (7).

10. Procédé selon l'une quelconque des revendications 7 à 9, **caractérisé en ce que** la pression de combustible d'au moins l'un des autres empilements de piles à combustible (11, 5) est choisie de sorte que la pression de combustible côté sortie de l'anode dudit autre empilement de piles à combustible (11, 5) correspond à la pression de combustible côté sortie de l'anode de l'empilement de piles à combustible (5) raccordé à la conduite de recirculation de combustible (7).
